**Europäisches Patentamt**

**European Patent Office**

**Office européen des brevets**

(1) Publication number: **0 123 545**

**B1**

## EUROPEAN PATENT SPECIFICATION

(45) Date of publication of patent specification: **15.02.89**

(51) Int. Cl.⁴: **D 04 H 1/56**

(21) Application number: **84302724.4**

(22) Date of filing: **24.04.84**

(54) Nonwoven sheet, method for making the same, and composite sheet incorporating it.

(30) Priority: **25.04.83 JP 71451/83**

(43) Date of publication of application:
**31.10.84 Bulletin 84/44**

(45) Publication of the grant of the patent:
**15.02.89 Bulletin 89/07**

(84) Designated Contracting States:
**GB**

(56) References cited:
**EP-A-0 053 188**
**GB-A-2 045 300**

(73) Proprietor: **TORAY INDUSTRIES, INC.**
**2, Nihonbashi-Muromachi 2-chome Chuo-ku**
**Tokyo 103 (JP)**

(72) Inventor: **Katsutoshi, Ando**
**14-15 Ohira 2-chome**
**Otsu-shi Shiga-ken, 520 (JP)**
Inventor: **Eiichi, Nishiura**
**263, Hiranocho Kamitanakami**
**Otsu-shi Shiga-ken, 520 (JP)**

(74) Representative: **Ellis, John Clifford Holgate et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a nonwoven sheet and a method for making such a sheet and particularly aims to make and provide a melt blown non-woven sheet having even and smooth surface useful as a heat retaining and heat insulating material.

A method of making a nonwoven sheet by a melt blowing process has long been known. Such a method has, for example, been disclosed in Japanese Patent Publication No. 22525, 1969 and USP No. 3825380.

In a nonwoven sheet as conventionally obtained by the melt blowing process, the fibres are insufficiently separated from each other and there exist randomly many rope-like fibre bundles in which fibres are entangled with each other, causing thick and coarse fibre bundles. This results in irregularity in weight per unit area of the sheet and unevenness in thickness. In addition, uniformity and smoothness of the surface of the sheet are spoilt by polymeric particles having no fibrous configuration which are produced during the melt blowing process, and by the rope like fibre bundles which have a diameter from tens of times to hundreds of times greater than the diameter of the fibres constituting the sheet.

On the other hand, there are conventional methods in which merely a cumulative fibre mass is used as a padding for clothes or mats or bedclothes, in order to give a heat-retaining or heat insulating ability, or in which a synthetic polymeric film with aluminium vacuum evaporated onto it is used in combination therewith. These methods have disadvantages. In the former method, retention of air is inevitably deteriorated to a large extent due to lowered compressive resilience of the fibres and in the latter method, the fibres used therefor generally shrink during dry cleaning by reason of heat shrinkage of the fibre. Synthetic polymer film has further faults that it has a very coarse feeling to the touch and, when stitched with a needle machine, tensile strength and tear strength are reduced to a large extent.

In order to eliminate the above-mentioned demerits, the method is known in which a nonwoven fabric consisting of filament fibres provided with a vacuum evaporated metal layer onto one surface is layered with a web composed of short staple fibres on the surface of the metal layer by needle punching. (Utility Patent Publication No. 50—22150).

This method however, has the disadvantage that, since the unity of the web with the nonwoven fabric composed of filaments is effected by needle punching, a number of pores are produced, penetrating through the thickness of the sheet, and heat tends to radiate through the pores so that no sufficient heat retaining effect can be achieved.

A further method of producing a nonwoven fabric is described in GB—A—2045300, where molten polymer and ejecting current is directed towards a valley-like fibre-collecting zone formed by porous plates, a collecting plate and a press plate, the angle between the axial direction of the ejecting current and the tangential line of the surface of the collecting plate lying between 0° and 90°.

An object of the present invention is to provide a melt blow nonwoven sheet which is much less irregular and which is improved to a large extent in uniformity and smoothness of the sheet surface.

Another object of the present invention is to provide a nonwoven sheet composite structure which has high resistance to cleaning as well as low permeability of vapour and high heat retention.

A nonwoven sheet according to the present invention is composed mainly of fine fibres which are individually distributed substantially throughout the sheet and are mainly oriented in one direction. In this specification the direction in which the fibres are mainly oriented will be referred to as the lengthwise direction, and the direction orthogonal to this will be called the transverse direction. The sheet also includes yarn-like fibre bundles of said fine fibres which are also oriented in the lengthwise direction of said sheet, the ratio of fibre bundles to fibres on one surface of the sheet being greater than the ratio of fibre bundles to fibres on the other surface of the sheet. In fact the yarn-like fibre bundles may outnumber the fine fibres on one surface of the sheet material and the fine fibres may outnumber the yarn-like fibre bundles on the other surface of said sheet material.

A method of making a nonwoven sheet according to the invention involves the use of a melt blowing spinneret to eject a molten thermoplastic polymer by means of ejecting currents towards the surface of a collecting member.

The method of the invention is characterised in that the melt blowing spinneret is so arranged that the axial direction of ejecting current of the melt blowing spinneret is inclined at an angle of between 15° and 75° with respect to the tangential line of the surface of the collecting member, the velocity of the ejected current blowing over the surface of said collecting member is not less than 5 meters per second and the distance between the ejecting spinneret and the surface of the collecting member is from 10 to 50 cm thereby producing an ejecting current which is forced to flow in one direction along the surface of the collecting member, entraining and orienting polymer fibres, of which some become entangled to form yarn-like fibre bundles.

The invention is also concerned with composite sheets made from the nonwoven sheets of the invention and from such a sheet when layered with another form of sheet.

Various aspects and embodiments of the present invention will be described by reference to the accompanying drawings, wherein:—

Figure 1 is a schematic view showing the front surface of a nonwoven sheet of the present invention;

Figure 2 is a schematic view showing the back surface of the same;

Figure 3 is a schematic view showing an example of a sheet consisting of two nonwoven sheets of the present invention layered to each other;

Figure 4 is a schematic view showing a sheet consisting of a nonwoven sheet of the invention and another fabric layered to each other;

Figure 5 is a schematic view showing a method of the invention;

Figure 6 is a cross sectional view showing an example of an ejecting spinneret used for the present invention;

Figure 7 is a view showing conditions of fine fibres and yarn-like fibre bundles on the surface of a collecting member;

Figure 8 is a plan view showing a positional relation between an ejecting spinneret and the collecting surface;

Figure 9 is a schematic view showing an example of a nonwoven sheet of the invention being subjected to water punching;

Figure 10 is a schematic oblique view showing an example in which a nonwoven sheet is layered with a nonwoven fabric with a thin metal film thereon;

Figure 11 is a schematic oblique view showing another alternative composite sheet;

Figure 12 is a schematic view showing a further alternative composite sheet; and

Figure 13 is a schematic view illustrating a manner of checking the orientation of the sheet.

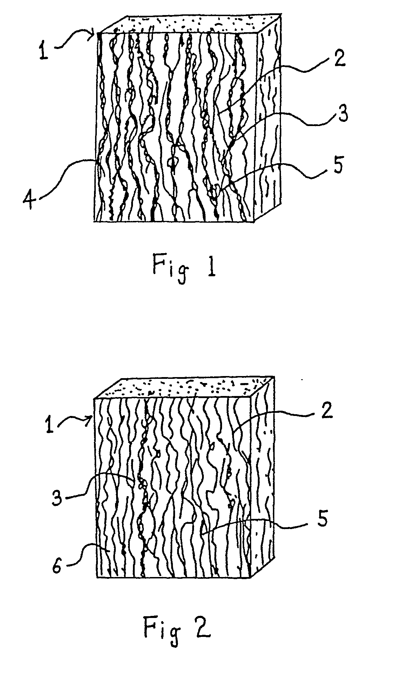

Figure 1 is a view showing a nonwoven sheet 1 of the present invention observed from its front surface 4. It is observed in the figure that the sheet consists of fine fibres 2 of melt blown fibres separated from each other and highly oriented in one direction and yarn-like fibre bundles 3 formed by said melt blown fibres entangled with each other and highly oriented in the same direction as said fine fibres and that polymeric particles 5 are buried under these fine fibres 2 and yarn-like fibre bundles 3.

Figure 2 is a view showing the sheet observed from its back surface 6. It is seen in the figure that the uniform nonwoven sheet consists of fine fibres 2 of melt blown fibres separated from each other and oriented in one direction and yarn-like fibre bundles 3 formed by said melt blown fibres entangled with each other and oriented in the same direction as said fine fibres and that polymeric particles are buried under these fine fibres 2 and yarn-like fibre bundles 3. In this case, however, the number of the yarn-like fibre bundles on the back surface is less than that of said bundles on the front surface and lots of polymeric particles 5 are exposed.

The fine fibres and the yarn-like fibre bundles are coexisting all over the layers of the sheet, though the yarn-like fibre bundles outnumber the fine fibres on one surface of the sheet material and the fine fibres outnumber the yarn-like fibre bundles on the other surface of said sheet material.

The fine fibres are fibres having a finite length and consist of melt-blown fibres having a titre of not greater than 1d. The yarn-like fibre bundles are composed of a plurality of melt blown fibres entangled with each other having an average diameter of not more than 1.5 mm. The number of the constituent fibres in the bundles is from several ends to several hundreds of ends. The yarn-like fibre bundles are oriented in the nonwoven sheet in the same direction as that of the fine fibres and obviously differ from the mass of thick rope-like fibre bundles (2 to 5 mm in diameter) which can be seen in a conventional nonwoven sheet consisting of melt blown fibres which are arranged randomly and without orientation in the sheet.

The polymeric particles comprise polymeric substances which are not brought into fine fibres during the melt flowing process and have a configuration either of a kind of bristle with a thickness which is tens to hundreds of times that of the average fibre diameter of the constituent fibres of the sheet, or of tiny beads which used to exist on the end surface of a middle portion of such a sheet.

In the nonwoven sheet fine fibres and yarn-like fibre bundles are mixed with each other and oriented in one direction in regular order and hence a uniform nonwoven sheet having less unevenness and having high tensile strength can be obtained. In addition, on one surface of the sheet, the yarn-like fibre bundles are in greater numbers than the fine fibres and are arranged in such a way that the polymeric particles are buried behind them. Therefore, smoothness of the surface of the sheet can be made extremely excellent. On the other hand, on the other surface of the sheet, the fine fibres are in greater numbers than the yarn-like fibre bundles and, whereas there should also be the effect of burying the polymeric particles, such an effect is somewhat poor compared with the opposite side of the sheet.

The nonwoven sheet has a sheet orientation of not less than 2, preferably not less than 3, and a coefficient of variation in sheet unevenness of not more than 12%, preferably not more than 9%.

The sheet orientation is determined from the ratio A/B, in which A represents the sheet tensile strength in the direction of the orientation of the fine fibres and yarn-like fibre bundles and B represents the sheet tensile strength in the perpendicular direction to the former.

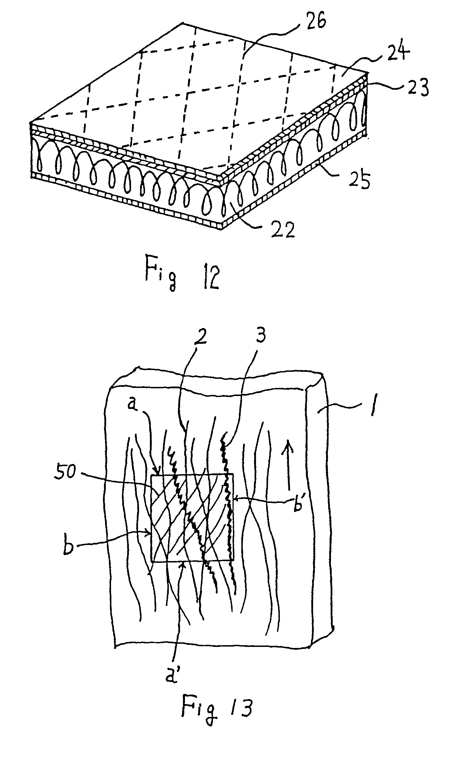

In the case of a nonwoven sheet which is not subjected to entangling treatment or adhesive treatment, the direction of orientation of the fine fibres and yarn-like fibre bundles arranged in the sheet can be observed clearly through a stereoscope of about 10 magnification. Further clarification of the degree of orientation can be achieved by sampling a piece of the sheet in the form of a square 50 in Figure 13 (dimensions 2 cm×2 cm), one pair of sides b, b' of which are approximately parallel to the lengthwise direction, i.e. the direction of the orientation in the nonwoven sheet, and counting the number of fine fibres and yarn-like fibre bundles crossing another pair of sides a, a' which are arranged orthogonally to the direction of the orientation in said sheet, i.e. in the transverse direction.

The coefficient of variation in sheet unevenness is determined by the following equation after a sheet piece of 1 m² in size is sampled from a nonwoven sheet and divided into small pieces of length 10 cm×width 10 cm and each piece is weighed. Coefficient of variation in sheet unevenness

$$(\%) = \frac{\text{standard deviation}}{\text{mean value}} \times 100$$

In the nonwoven sheet, the sheet formation is maintained by the fine fibres and the yarn-like fibre bundles being welded by self-adhesion or entangled mutually or with each other. In order to further strengthen adhesion, the following treatments can be used: three-dimensional entangling treatment such as water punching; bonding treatment such as using resinous adhesion, stitch bonding and emboss adhesion treatments; and multi layered construction of nonwoven sheets or of nonwoven sheets with other sheet-form products such as fabric, knitting, net and nonwoven cloth.

The entangling treatment to be applied to the nonwoven sheet is most preferably the water punching treatment, whereby a uniform nonwoven sheet can be obtained, in which fine fibres and yarn-like fibre bundles are highly oriented in the sheet direction and in which on one side of the sheet the yarn-like fibre bundles are more numerous than the fine fibres, while on the other side the fine fibres are more numerous than the yarn-like fibre bundles.

The nonwoven sheet subjected to the water punching treatment according to the present invention can meet a tensile strength per unit weight of not less than 0.01 kg/5 cm/g/m².

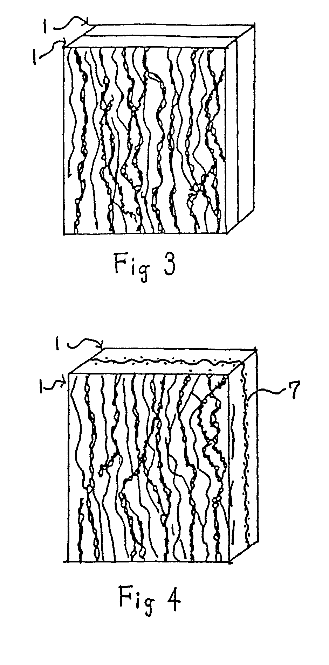

Figure 3 shows an example of a layered sheet of the nonwoven sheets of the present invention shown in Figure 1. A uniform nonwoven sheet, both surfaces of which are smooth, can be obtained by a method in which two nonwoven sheets of this invention are layered in such a manner that the respective surfaces of the sheets on which the polymeric particles are much more exposed are contacted with each other. Needless to say, it is possible to make a composite sheet in such a way that the orientation of the fine fibres and the yarn-like fibre bundles in the respective nonwoven sheets are arranged orthogonally to each other.

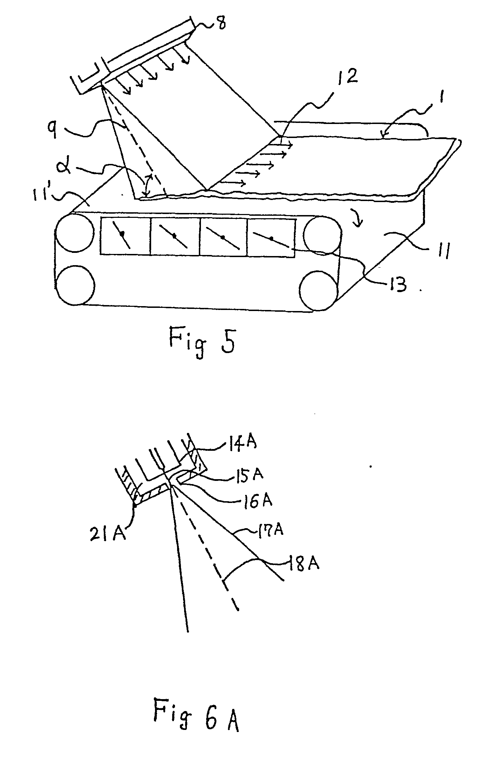

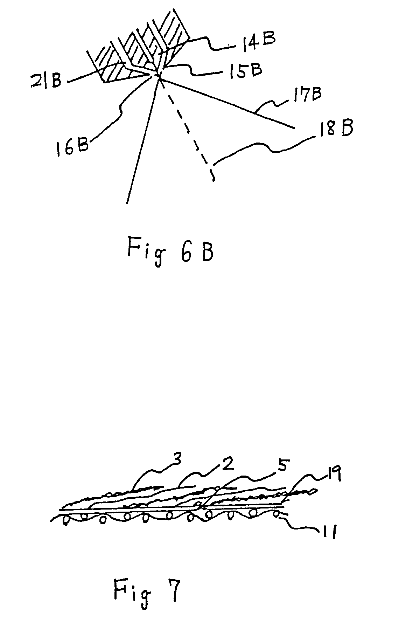

A method of making the nonwoven sheet according to the present invention will be described below. Figure 5 is a schematic view showing the method and Figures 6A and 6B are cross-sectional views showing an example of ejecting spinnerets, respectively. In Figures 5 and 6, reference numeral 11 designates a collecting conveyor as the collecting member, 8 is a rectangular ejecting spinneret which is provided at a predetermined angle with respect to the collecting surface 11' of the conveyor, 14A and 14B designate an orifice, 21A and 21B the fluid slit or fluid path, 16A and 16B a fine hole or slit which is formed immediately below the orifice and 13 a suction device serving to control the flow rate on the collecting surface.

To form the nonwoven sheet according to the present invention, it is desirable that the ejecting spinneret is provided in such a manner that an angle α (hereinafter referred to simply as an ejecting angle α) between axial line 9 of the melt blow jet current which is ejected from spinneret 8 and conveyor collecting surface 11' be between 15 and 75°, preferably between 30 and 60°, resulting that a jet current is formed so as to flow in one direction, or in the direction of arrow mark 12 along the collecting surface. Axial line 9 of the melt blow ejecting current corresponds to a central line 18A or 18B which is the central axis formed in the ejecting current expanding into the air over an angle, when melt polymer 15A, 15B discharged from orifice 14A, 14B by hot fluid 17A, 17B and ejected from fine hole 16A or slit 16B, is made into fine fibre.

When the ejecting holes in a spinneret are in multi-rows instead of in a single row, the central axis is also taken as the central line.

Usually central line 9 forms a line perpendicular to the front surface of the ejecting spinneret.

An ejecting angle of less than 15° is not preferable because it causes cumulative web by the ejecting current to scatter to a large extent, with the result that a satisfactory nonwoven sheet may not be obtained. An ejection angle of more than 75° is also not preferable because entangled melt blown fibres grow greatly to produce a number of thick rope-like fibre bundles and disorder of the webs may occur, due to reflection currents caused by bombardment of melt blow ejection currents on the collecting surface, this resulting in unevenness of the sheet.

The use of ejecting currents flowing in one direction along the collecting surface makes it possible to produce separate fine fibres and formation of yarn-like fibre bundles by slight entangling of fine fibres to cause these fine fibres and yarn-like fibre bundles to coexist with an orientation in the ejecting direction in good order on the collecting surface. The fine fibres and the yarn-like fibre bundles further serve to bury the polymeric particles within the sheet.

Figure 7 illustrates the formation of the nonwoven sheet. Fine fibres 2, which are accumulated on the web surface by ejecting currents flowing along the collecting surface 11', are oriented while floating in the ejecting direction whilst separate from each other, and at the same time fine fibres are entangled with each other to form yarn-like fibre bundles 3. These fine fibres and yarn-like fibre bundles which are floating over the surface can cover and bury the polymeric particles 5 on the web surface. On the bottom side of the web on the other hand, since friction with the conveyor is very large, it is difficult to form yarn-like fibre bundles and hence the number of fine fibres is increased.

As a result, the upper or front surface of the sheet along which the ejecting current flows has yarn-like fibre bundles in greater number than that of the separated fine fibres, and the effect of burying the polymeric particles is superior, while the back surface of the sheet facing the conveyor has the separated fine fibres in greater number than that of the yarn-like fibre bundles, and the effect of burying polymeric particles is somewhat poor, because the occurrence of said yarn-like fibre bundles on the back surface of the sheet is less than on the front surface. In order to meet the above-described conditions, the flowing velocity of ejection current on the collecting surface is not lower than 5 m/sec, preferably not lower than 10 m/sec and more preferably not lower than 20 m/sec. Although the velocity of the current on the collecting surface can be controlled by suction provided below the surface, the suction apparatus may of course be omitted.

A conveyor having a horizontal surface made of wire mesh, or a flat board or a drum having a spherical surface may be used as the collecting surface.

The collecting surface may move in the same direction as the ejecting flow or in the opposite direction but movement in the same direction is preferred.

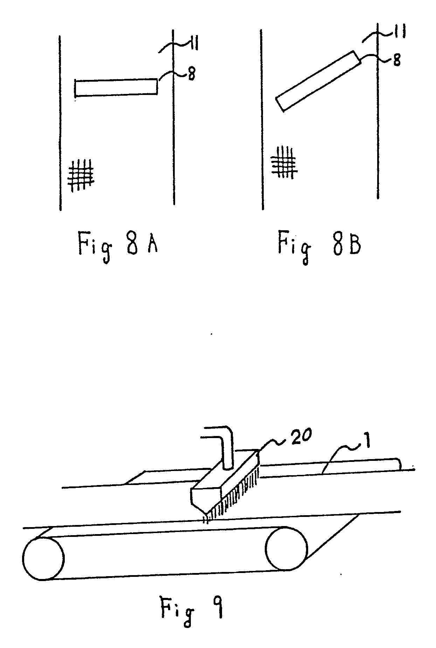

Referring to the positional relation of spinneret 8 with the collecting surface, it may be positioned at right angles across the direction of sheet travel as shown in Figure 8A or may be positioned obliquely as shown in Figure 8B.

The collecting distance is 10 to 50 cm. The collecting distance is the distance between the spinneret and the position at which the axial line of the ejection current intersects with the collecting surface.

When the collecting distance is less than 5 cm, the separation of fibres from each other and the orientation effect are poor, since cooling of melted polymer is insufficient and, when greater than 80 cm, the uniformity of the sheet may be impaired and the orientation effect insufficient, because fibres may stall to produce random and irregular rope-like fibre bundles.

Ejection air volume is preferably not less than 5 Nl/min per unit polymer discharge of 1 g/min so as to minimise the possibility of rope-like fibre bundles due to fibre stalling before being collected and to enhance uniformity and smoothness of the sheet on the collecting surface.

Synthetic organic polymers used in the present invention include polymers capable of melt spinning such as polyolefins, polyesters, polyamides, polyurethanes, fluorine type polymers and ion type polymers.

The nonwoven sheet of the present invention can be used as it is, or can have various applications as basic material through being subjected to entangling and bonding treatments such as water punching, resin adhesion, emboss adhesion and stitch adhesion, according to uses and purposes.

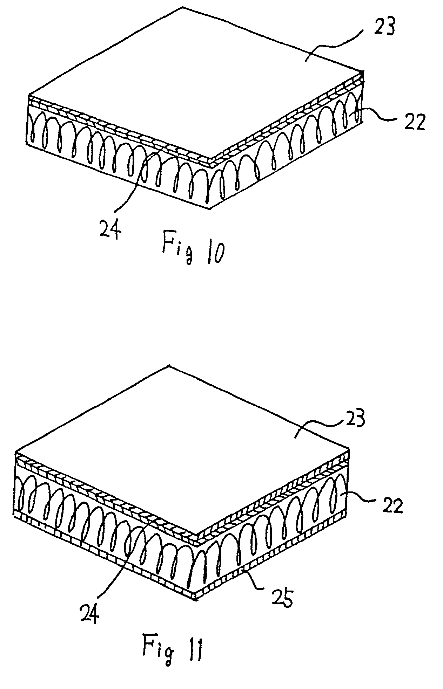

Figure 9 shows an example of an entangling treatment using a water punching machine 20.

The nonwoven sheets of this invention may be layered with each other or may be layered with other types of nonwoven sheet, or other sheet material such as knitted fabric or woven fabric.

It is also possible, in addition, that synthetic leather can be produced by impregnating a layered sheet with elastic resin and thereafter subjecting it to a buffing process or coating process.

Nonwoven sheets of the present invention can be used in applications such as filters, heat insulating or retaining materials, various industrial basic materials, medical materials, synthetic leather materials and battery separators because of their uniformity, smoothness and high tensile strength.

A composite sheet according to the present invention, which has excellent resistance to cleaning, low permeability of vapour and high heat retaining ability, will be described below.

This sheet is a composite structure consisting of at least two layers of fibre sheets, at least one layer being a fine fibre sheet according to the invention composed of melt blow fibres having a fineness of not more than 1d and the other layer is a short staple web having a thin metal film on one of its sides.

The said fine fibre sheet can exhibit excellent heat retaining ability and resistance to cleaning when fibres constituting the sheet have an average fineness of not more than 1d. In order to make the sheet, though thin and fine, of high heat retaining ability, the average fineness of the fibres should be not more than 0.5d.

Short staple webs used for forming a thin metal film on one side include any binder type nonwoven fabric, onto which a thin metal film layer of aluminium, etc., can be adhered by conventional means such as transcribing. In order especially to enhance the adhesion effect with the fine fibre sheet and thereby lower the cleaning area shrinkage rate, the fluff degree is preferably between 50 and 500 counts per 10 cm on the average.

The fluff degree is determined as follows: a short staple web having a thin metal film layer adhered to one side is folded in such a way that short staple comes to outside; the numbers of fluffs and loops raised in the range of 10 cm along the fold line are counted through a stereoscopic microscope, one fluff being counted as fluff degree 1 and one loop as fluff degree 2; and this operation is repeated five times to determine the mean value.

When a short stable web has a fluff degree of 50 to 500 counts, its adhesion effect with a fine fibre nonwoven sheet is increased and the area shrinkage rate after cleaning is reduced thereby. In the case that the fluff degree is less than 50 counts, it causes fibre breaks in the fine fibre sheet and transference of air between fibres, and in the case of its being more than 500 counts, the area shrinkage rate after cleaning becomes large and the cleaning resistance is weakened. Therefore both cases are unpreferred.

The texture of the short staple web is preferably 15 to 100 g/m² from a point of view of drape effect and stability of the shape during cleaning.

For staples composed of a short staple web, it is recommendable to use staples having a fineness of about 0.8 to 5d and a fibre length of about 20 to 100 mm in compliance with the denier, taking into consideration the drape effect, carding property and adhesion effect with a fine fibre sheet.

A thin metal film layer of aluminium, etc., is adhered to the entire surface of one side of the short staple web using adhesives, for example by the transcribing method.

Adhesives used in this case may be any ones capable of protecting the thin metal film layer and adhering it to the short staple web, including urethane resin, acrylic resin, unsaturated polyester resin and cellulose nitrate resin, which are used in the so-called transcribing process and which are used independently or in combination with each other.

The thin metal film layer formed on one side of the short staple web is of importance for radiating heat emitted from the human body and for preventing heat from escaping. The heat retaining effect can be enhanced greatly by combining a short staple web having the thin metal layer coated on its one side with a fine fibre nonwoven sheet of the invention which consists of ultra-fine fibres. Such a sheet has finely divided air cells therein and is excellent in convection-preventing effect.

In this sense, permeability of the thin metal film layer is important. When the nonwoven sheet having the composite structure of the present invention is used as a padding, the permeability is generally not more than 15 m/cm². sec, preferably not more than 5 m/cm². sec by the Frazier method, depending on materials used as surface fabrics in combination with this sheet.

When a short staple web having a thin metal film layer formed on its one side is layered with a fine fibre sheet of the invention, the fine fibre sheet may be directly superposed on the surface of the short staple web which does not have the thin metal film layer, so that the metal film layer lies on the outside of the composite sheet. On the other hand the fine fibre sheet may be superposed directly on the surface of the short staple web having the metal film layer in which case the metal film layer comes inside of the composite sheet.

In the above description, a fine fibre sheet is layered on one side with a short staple web having a thin metal film layer but another short staple web can also be layered on the other surface of the fine fibre sheet, in order to further lower the cleaning area shrinkage rate of the composite structure with the metal thin film and improve handling.

If a short staple web is thus layered on the other side of a fine fibre sheet it may be a web similar to the web used for laminating a thin metal film layer on it.

When a thin metal film layer of the short staple web is directly superposed on a fine fibre sheet, since no sufficient entangling effect is obtained, it is preferable to adopt the technique of quilting or to subject them to a bonding process. When a fine fibre sheet is layered with a short staple web, an adequate adhesive may of course be used.

When a nonwoven sheet according to the present invention is used in a composite structure as a heat retaining material, the unit weight of fibres in the structure is preferably between 50 and 500 g/m². When used for clothing, it is preferably between 70 and 300 g/m² and the area shrinkage rate after cleaning is preferably not more than 10%.

The nonwoven sheet layered with a thin metal film layer according to the present invention will be described below with reference to Figures 10 to 12.

Figure 10 shows a fine fibre sheet 22 of the invention layered with a short staple web 24 on the surface of which a thin metal film layer 23 is formed and Figure 11 shows an example in which another short staple web 25 is further layered on the other surface of the fine fibre sheet 22. When using the aforementioned sheet for clothing, a surface cloth is further layered on a surface of the fine fibre sheet 22 (Figure 10) or on that of the short staple web 25 side (Figure 11). This may be performed merely by superposition but the resin bonding process is preferably applied for reasons of cleaning durability.

On the other hand, any lining fabric is layered on the opposite side. Of course the front surface fabric and the lining fabric may be used reversely.

Figure 12 shows the fine fibre sheet 22 layered with a short staple web with a thin metal film layer 23 inside adopting a quilting structure. For use as a cloth, the front surface fabric may be layered on the surface of the short staple web 24 side having the thin metal film layer and the lining fabric be layered on the opposite side or vice versa.

Materials used as the short staple web of the present invention include polyester, polyamide, acrylonitrile, rayon, or blends of any of these polymers.

Because of its constitution as mentioned above, the nonwoven sheet composite structure according to the present invention has the following features:

(1) Even in thin sheets it has very high heat retaining ability.

(2) It has unique soft touch and drape.

(3) It is crease free and with good stability of formation.

(4) It withstands petroleum type dry cleaning.

(5) It is sewn with ease.

Therefore, the nonwoven sheet composite structure can be useful for use not only as a padding for cloth but also for sleeping bags, covers for foot warmers, gloves, boots, hats and various heat retaining materials for industrial use. Since it is capable of combined use with other materials, it is a structure promising to have wide applications in the future.

Further examples of the present invention will be described in detail with reference to the following examples.

Polymeric particles as described above are confirmed by pressure welding a nonwoven sheet by rolls, dyeing it and thereafter counting the particles under a stereoscopic microscope. Heat resistance values, thicknesses and permeabilities are measured by the following methods:

Heat resistance value: 1 clo means the heat retaining ability of a cloth to keep such conditions so stable that a man can feel comfortable and his average skin temperature can be kept at 33°C, while lying quietly in a room with an atmospheric temperature of 21°C, a humidity of not more than 50% and an air current of 10 cm/sec.

It is assumed that the subject emits a heat of 50 Kcal/m². hour and 75% of the heat is radiated through the cloth.

1 clo is mathematically defined as follows:

$$1 \text{ clo} = 0.18°C. \text{ hour. } m^2/Kcal$$

The measurement is done in accordance with ASTM: D—1518—57T.

Thickness: Thickness of nonwoven sheet is measured using a sample of 2 cm² under 5 g/cm² of load.

Permeability: It is measured according to JIS-L-1096 Frazier method.

Example 1

In an apparatus as shown in Figure 5, an ejection spinneret having a length of 125 cm was set so that the spinneret face was inclined with an ejection angle α of 45° with respect to the collecting surface. Polybutylene terephthalate at 300°C was discharged through 90 orifice holes having a diameter of 1 mm and arranged at 14 mm pitch and melt blowing was carried out using hot air at 340°C through air holes, the number of which was the same as the number of orifices. A nonwoven sheet of the present invention was obtained after being collected on the conveyor surface moving at a velocity of 1 m/min.

In this case, the ejection angle was 45°, the collecting distance was 15 cm, the wind velocity on the collecting surface was 105 m/sec and the ejecting air volume was 93 Nl/min (per 1 g/min of unit polymer discharge).

The nonwoven sheet thus obtained had fibres with a titre of 0.09 d, an average diameter of yarn-like fibre bundles of 0.2 mm, a unit weight of the sheet of 150 g/m² a coefficient of variation in sheet unevenness of 4.9%, a sheet orientation of 5.1 and a heat resistance of 3.6 clo/cm, and the sheet was a uniform nonwoven sheet in which fibres and yarn-like fibre bundles were highly oriented in the lengthwise direction of the sheet.

Referring to the correlation between the yarn-like fibre bundles and fine fibres, the former were numerous on the front surface of the nonwoven sheet (the surface not in contact with conveyor) and the latter were numerous on the back surface of the sheet (opposite side of the former).

Almost all polymeric particles were found buried on the front surface side. On the back surface, 12 pieces/cm² of polymeric particles were observed unburied.

In order to confirm to what extent the fine fibres and yarn-like fibre bundle were oriented in the obtained sheet, the orientation was checked by the method mentioned above and showed that fibres and yarn-like fibre bundles passing across both sides b, b' in Figure 13 parallel to the orientation direction were scarcely found. Almost all the fine fibres and yarn-like fibre bundles crossed both sides a, a' in Figure 13 orthogonal to the orientation direction of the sample.

Example 2

In the apparatus as shown in Figure 5, an ejection spinneret having a length of 125 cm was set in such a way that the spinneret face was inclined with an ejecting angle of 30° with respect to the collecting surface. Polypropylene heated to 320°C was discharged through 90 orifice holes having a diameter of 1 mm and arranged at 14 mm pitch and melt blowing was done using air heated to 350°C through the same number of air holes as the orifice holes. After the collection on the conveyor moving at a velocity of 1 m/min, water punching was carried out.

In this case, the ejecting angle was 30°, the collecting distance was 25 cm, the wind velocity on the collecting surface was 82 m/sec and the ejection air volume was 60 Nl/min (per 1 g/min of unit polymer discharge).

The nonwoven sheet thus obtained according to the present invention had fibres with a titre of 0.16 d, an average diameter of yarn-like fibre bundles of 0.23 mm, a weight of 150 g/m², a coefficient of variation in sheet unevenness of 5.8% and a sheet orientation of 4.6, and the sheet was a uniform nonwoven sheet in which fine fibres and yarn-like fibre bundles were highly oriented in the longitudinal direction of the sheet. As for the correlation between the yarn-like fibre bundles and the fine fibres, the former were abundant on the front surface of the sheet, while the latter were abundant on the back surface. 2 pieces/cm² of polymeric particles were found exposed on the front surface and the rest was buried, while 10 pieces/cm² of the particles were found exposed on the back surface.

This confirmation was made relatively with ease since polymeric particles came up onto the surface due to the water punching.

The front surface of the sheet felt smooth to the touch but the back surface felt uneven due to polymeric particles.

The water punching was carried out twice, once from the front surface of the sheet and once from the back surface, under the following conditions: hole diameter, 0.13 mm; hole pitch, 0.6 mm; vibration cycle of the spinneret, 5 cycle/sec; water pressure, 45 kg/cm²; process velocity, 1 m/min.

Example 3

The ejection spinneret of Example 1 was set in such a way that the ejection angle α became 60° and the sheet obtained after melt blowing was subjected to acrylic resin processing.

In this case, the ejection angle was 60°, the collecting distance was 30 cm, the air velocity on the collecting surface was 65 m/sec and the ejection air volume was 20 Nl/min (per 1 g/min of unit polymer discharge).

The nonwoven sheet thus obtained according to the present example had fibres with a fineness of 0.5d, an average diameter of yarn-like fibre bundles of 0.3 mm, unit weight of the sheet of 100 g/m², a coefficient of variation in sheet unevenness of 5.3% and a sheet orientation of 3.2 and the nonwoven sheet had fine fibres and yarn-like fibre bundles highly oriented in its longitudinal direction.

The back surface of the nonwoven sheet was enriched with yarn-like fibre bundles. One piece/cm² of polymeric particles was found on the front surface and 11 pieces/cm² were found on the back surface.

Example 4

In the apparatus as shown in Figure 5, an ejection spinneret having a length of 50 cm was set in such a way that spinneret face was inclined at an ejection angle α of 45° with respect to the collecting surface. Polybutylene terephthalate at 300°C was discharged through 500 orifice holes having a diameter of 0.35 mm arranged at 1 mm pitch and melt blowing was carried out by ejecting hot air at 340°C through slit holes. A nonwoven sheet of the invention was obtained after being collected on the conveyor moving at a velocity of 1 m/min.

In this case, the ejection angle was 45°, the collecting distance was 17 cm, the air velocity on the collecting surface was 110 m/sec and the ejection air volume was 170 Nl/min (per 1 g/min of unit polymer discharge).

The nonwoven sheet thus obtained according to the present invention had a fibre titre of 0.06d, an average diameter of yarn-like fibre bundle of 0.17 mm, a unit weight of the sheet of 150 g/m², a coefficient of variation in sheet unevenness of 4.7% and a sheet orientation of 5.3 and the sheet was a uniform nonwoven sheet in which fine fibres and yarn-like fibre bundles were highly oriented in good order in the lengthwise direction of the sheet.

Yarn-like fibre bundles were richer on the front surface (surface not in contact with conveyor) of the present invention than on the back surface. When the sheet unevenness was measured, a sheet of 50 cm width and 200 cm long was sampled up and the measurement was made with a small piece of 10×10 cm. No polymeric particle was found on the front surface, while 6 pieces/m² of polymeric particles were found on the back surface.

As regards the orientation of fine fibres and yarn-like fibre bundles, scarcely any of them were passing across both sides (b, b' in Figure 13) of the sample arranged parallel to the orientation direction.

Example 5

The nonwoven sheets obtained in Example 1 were layered in such a way that the back surfaces of the sheets were contacted and subjected to water punching. The sheet orientation was 4.8 and the coefficient of variation in sheet unevenness was 4.5%.

Both sides of the sheet were enriched with yarn-like fibre bundles and had a smooth surface on which almost no polymeric particles were found exposed. The water punching was carried out in accordance with Example 2, except that a water pressure of 70 kg/cm² was used.

Example 6

A coarse leno fabric was interposed between the nonwoven sheets obtained in Example 5 and the product was subjected to water punching. The obtained sheet was a uniform nonwoven sheet and had a coefficient of variation in sheet unevenness of 4.4%.

Polymeric particles on the sheet surface were buried under fine fibres and yarn-like fibre bundles. As with Example 5, the sheet had smooth surfaces having almost no polymeric particles exposed thereon.

The leno fabric used had a warp of 20d—2f, a weft of 20d—2f, a warp density of 20 ends and a weft density of 20 ends. The water punching conditions were in accordance with those in Example 5.

Example 7

In an apparatus as shown in Figure 5, a small-size ejection spinneret having a length of 25 cm was used to conduct the following tests.

Melt blowing was carried out under the same condition as Example 1, except the use of an ejection angle of 13° and a collecting distance of 20 cm. As a result, cumulative fibres were scattered or torn to pieces and hence no cumulative web was obtained.

A sheet obtained after the melt blowing conducted at an ejection angle of 80° and a collecting distance of 15 cm had a unit weight of the sheet of 80 g/m² and a coefficient of variation in sheet unevenness of 13%. Fine fibres and yarn-like fibre bundles were found not oriented and no polymeric particles were found buried. The number of polymeric particles on the front surface was the same (12 pieces/cm²) as on the back surface.

Example 8

Melt blowing was carried out at a collecting distance of 4 cm using the same apparatus as in Example 7. Fibres were welded with each other, resulting in no orientation and no effect of burying polymeric particles. Furthermore, melt blowing was carried out at a collecting distance of 100 cm. However, with random rope-like fibre bundles generated, the obtained sheet was a nonuniform sheet having a unit weight of 100 g/m² and a coefficient of variation in sheet unevenness of 14%. The rope-like fibre bundles had a diameter of 3 mm.

Example 9

The tensile strength per unit weight of the nonwoven sheet obtained in Example 2 was compared with the tensile strength per unit weight of a comparative nonwoven sheet which was collected for comparison in the same manner as in Example 2, except for an ejecting angle of 90°, namely vertical to the conveyor surface.

The nonwoven sheet of Example 2 of the present invention had a longitudinal tensile strength of 0.052 kg/5cm/g/m$^2$ and a lateral tensile strength of 0.035 kg/5cm/g/m$^2$, while the comparative nonwoven sheet had a longitudinal tensile strength of 0.005 kg/5cm/g/m$^2$ and a lateral tensile strength of 0.002 kg/5cm/g/m$^2$.

The nonwoven sheet of the present invention had longitudinally high tensile strength per unit weight in particular.

The reason for this is considered to be that fine fibres and yarn-like fibre bundles are oriented in the lengthwise direction of the sheet so that stresses are effectively shared by them. By contrast, in the comparative nonwoven sheet, fine fibres and rope-like fibre bundles are oriented randomly and less extended and hence stresses are not effectively shared by them. This is the reason for the sheet to be easily broken in structure and to be poor in tensile fracture strength.

Example 10

The nonwoven sheet obtained in Example 1 was subjected to water punching under the same condition as Example 2. The tensile strength in unit weight of the obtained nonwoven sheet was 0.052 kg/5cm/g/m$^2$ longitudinally and 0.035 kg/5cm/g/m$^2$ laterally.

For comparison, the tensile strength of a comparative sheet, which was collected in the same manner as in Example 1 except for an ejection angle of 90°, or vertical to the conveyor surface, was measured. This had a longitudinal tensile strength value of 0.005 kg/5cm/g/m$^2$ and a lateral value of 0.002 kg/5cm/g/m$^2$. The sheet had a heat resistance of 2.5 clo/cm.

The above-mentioned comparative nonwoven sheet was subjected to water punching under the same condition as Example 2. As a result, fibre breaks occurred and no entangling effect was obtained.

The reason for this is considered to be that the ejection pressure caused by the vertical ejecton resulted in welding of fibres with each other to a large extent leading to no movement of fibres and hence fibre breaks were caused.

As another comparative example, a comparative nonwoven sheet was prepared to prevent fibres from welding with each other by changing the ejection angle and the collecting distance in Example 1 to 90° and 120 cm, respectively, and subjected to water punching under the same condition as mentioned above. The tensile strength per unit weight of the nonwoven sheet thus obtained was 0.008 kg/5cm/g/m$^2$ longitudinally and 0.005 kg/5cm/g/m$^2$ laterally. The

reason for the low tensile strength of the comparative sheet is considered that no entangling effect was achieved, because it had a sheet unevenness as large as 18%.

Example 11

Polybutylene terephthalate was melt blown to prepare a padding consisting of a fine fibre sheet of the invention having an average fineness of 0.3d and a unit weight of 120 g/m$^2$. On the other hand, metallic aluminium was vacuum evaporated on a polypropylene film to a thickness of 400 A and the aluminium film was transferred to one side of a short staple web having a unit weight of 19 g/m$^2$ and a ratio of staple to binder of 55 to 45. Mixed staple fibres consisting of polyester staple of 1.5 d, nylon 6 staple of 1.5 d and rayon staple of 1.8 d in the ratio of 70/20/10 were used in this example and acrylic binder was used as the binder.

The same short staple web as the above-mentioned short staple web was prepared without metallic film and the padding was sandwiched by the staple web bearing metallic film and the staple web without metal film to prepare a thin metal film composite structure. The structure had a unit weight of 160 g/m$^2$, a thickness of 2.6 mm, a heat resistance of 6 clo/cm and a permeability of 1.0 cc/cm$^2$. sec.

A winter coat was prepared by sewing up with the obtained thin metal film layer-laminated nonwoven sheet using an oil coated fabric consisting of polyester and cotton having a unit weight of 150 g/m$^2$ as a front surface fabric and a nylon taffeta having unit weight of 70 g/m$^2$ as back surface fabric. The composite product thus obtained had a heat resistance of 7 clo/cm, showed excellent heat retaining ability and felt soft and fitting and hence an extremely superior winter cloth. Even after using it for a long time and subjecting it to 5 times repetition of petroleum type dry cleaning, the product showed little degradation in heat retaining ability, had no shrinkage and thus proved having very high durability.

Example 12

The same fine fibre sheet as Example 11, a short staple web having a metal film layer on one side of it and a short staple web were layered with each other as shown in Figure 12 and subjected to quilting processing at a pitch of 4 mm so as to have a space of 225 cm$^2$ to prepare a thin metal film layer-laminated nonwoven sheet of the present invention. The structure thus obtained had unit weight of 162 g/m$^2$, a thickness of 2.5 mm, a heat resistance of 6.2 clo/cm and a permeability of 2.5 cc/cm$^2$. sec.

A winter coat was prepared by further laying a front surface fabric and a back surface fabric on respective surfaces of said sheet and sewing them up in the same manner as in Example 11. The obtained composite product had a heat resistance of 7.2 clo/cm, excellent heat retaining ability and high durability in practical use.

Example 13

Polybutylene terephthalate was melt blown to prepare a padding consisting of a fine fibre nonwoven sheet of the invention having an average fibre fineness of 0.2 denier and unit weight of 200 g/m². One side of the padding was layered with a short staple web having a thin metal film layer on one surface of it as used in Example 11 and thereafter a "Tetron" spun fabric (unit weight 170 g/m²) was layered on the other surface of it by using acryl-vinyl chloride copolymer resin (5 g/m²). A winter coat was prepared through sewing with "Tetoron" taffeta (unit weight 80 g/m²) used as a back surface fabric layered on the opposite surface of the composite material from that on which "Tetron" spun fabric was already layered.

The composite product thus obtained had a unit weight of 480 g/m², a thickness of 6 mm, a heat resistance of 4.5 clo/cm and a permeability of 0.2 cc/cm². sec. As a result, the product felt comfortable to wear and especially was excellent in fitting property, showed no change in appearance even after wearing over a long day period and exhibited high heat retaining ability. It also showed high durability even when petroleum type dry cleaning was repeated.

**Claims**

1. A nonwoven sheet composed mainly of the fine fibres which are individually distributed substantially throughout the sheet and mainly oriented in one direction ("the lengthwise direction"), said sheet also including yarn-like fibre bundles of said fine fibres which are also oriented in the lengthwise direction of said sheet, the ratio of fibre bundles to fibres on one surface of the sheet being greater than the ratio of fibre bundles to fibres on the other surface of the sheet.

2. A nonwoven sheet according to claim 1, wherein the yarn-like fibre bundles outnumber the fine fibres on one surface of the sheet material and the fine fibres outnumber the yarn-like fibre bundles on the other surface of said sheet material.

3. A nonwoven sheet as claimed in claim 1 or 2, wherein the fine fibre consists of a thermoplastic synthetic fibre and is produced by a melt blowing process.

4. A nonwoven sheet as claimed in any preceding claim, wherein the fine fibre is a fibre having a finite length and a denier of not more than 1 denier.

5. A nonwoven sheet as claimed in any preceding claim, wherein coefficient of variation of sheet unevenness is not more than 12%.

6. A nonwoven sheet as claimed in any preceding claim, wherein the fine fibre consists of a polybutylene terephthalate.

7. A nonwoven sheet as claimed in any preceding claim, wherein said nonwoven sheet is subjected to water punching treatment.

8. A nonwoven sheet as claimed in any preceding claim, wherein the tensile strength per unit weight of the sheet is not less than 0.01 kg/5cm/g/m².

9. A composite sheet comprising a nonwoven sheet according to any preceding claim layered on at least one of its surfaces to another sheet material.

10. A composite sheet as claimed in Claim 9, wherein a sheet material to be layered on said nonwoven sheet material is a different nonwoven sheet from the nonwoven sheet of any of claims 1 to 8.

11. A composite sheet as claimed in Claim 9, wherein the said sheet material to be layered is a fabric selected from a knitting fabric and a woven fabric.

12. A composite sheet as claimed in Claim 10, wherein the said sheet material to be layered is a nonwoven fabric sheet consisting of short staple fibres having a film-like thin metal layer provided on one surface of said fabric sheet.

13. A composite sheet as claimed in Claim 12, wherein the nonwoven sheet according to any of claims 1 to 8 is layered on the surface of said nonwoven fabric sheet remote from said metal layer.

14. A composite sheet as claimed in Claim 12, wherein the nonwoven sheet material according to any of claims 1 to 8 is layered on the surface of said nonwoven fabric sheet which is provided with the metal layer thereon.

15. A composite sheet as claimed in Claim 12, wherein the said nonwoven fabric sheet having short staple fibres (but without the metal layer) is layered on the opposite surface of the nonwoven sheet material according to any of claims 1 to 8 from the surface provided with the nonwoven fabric sheet with the metal layer thereon.

16. A composite sheet as claimed in any of Claims 12 to 15 wherein the nonwoven fabric sheet consisting of short staple fibres having the metal layer on one surface thereof possesses an average frequency of fluff within the range of 50 to 500 counts per 10 cm.

17. A method of making a nonwoven sheet, in which a melted thermoplastic polymer is ejected from a spinneret with ejecting currents and is impinged towards the surface of a collecting member at an angle to the surface to form a web characterized in that the melt blowing spinneret is so arranged that the axial direction of ejecting current of the melt blowing spinneret is inclined at an angle of between 15° and 75° with respect to the tangential line of the surface of the collecting member, the velocity of the ejected current blowing over the surface of said collecting member is not less than 5 meters per second and the distance between the ejecting spinneret and the surface of the collecting member is from 10 to 50 cm, thereby producing an ejecting current which is forced to flow in one direction along the surface of the collecting member, entraining and orienting polymer fibres, of which some become entangled to form yarn-like fibre bundles.

18. A method of making a nonwoven sheet as claimed in Claim 17, wherein the ejected volume of the ejecting current is not less than 5 Nl/min per 1 g/min of unit polymer discharge.

**Patentansprüche**

1. Faservliesbahn, hauptsächlich bestehend aus feinen Fasern, die im wesentlichen über die gesamte Bahn einzeln verteilt und hauptsächlich in einer Richtung ("der Längsrichtung") orientiert sind, wobei die Bahn ferner garnartige Faserbündel aus den besagten feinen Fasern enthält, die ebenfalls in Längsrichtung der Bahn orientiert sind, wobei das Verhältnis zwischen den Faserbündeln und den Fasern auf einer Seite der Bahn größer ist als auf der anderen Seite der Bahn.

2. Faservliesbahn nach Anspruch 1, wobei auf einer Seite des Bahnmaterials die Anzahl der garnartigen Faserbündel die Anzahl der feinen Fasern übersteigt und wobei auf der anderen Seite des Bahnmaterials die Anzahl der feinen Fasern die Anzahl der garnartigen Faserbündel übersteigt.

3. Faservliesbahn nach Anspruch 1 oder 2, wobei die feine Faser aus einer thermoplastischen Kunstfaser besteht und durch ein Schmelzblasverfahren hergestellt ist.

4. Faservliesbahn nach einem der vorhergehenden Ansprüche, wobei die feine Faser eine Faser mit endlicher Länge und einem Titer von nicht mehr als 1 Denier ist.

5. Faservliesbahn nach einem der vorhergehenden Ansprüche, wobei die Schwankung der Bahnungleichmäßigkeit nicht größer als 12% ist.

6. Faservliesbahn nach einem der vorhergehenden Ansprüche, wobei die feine Faser aus einem Polybutylenterephthalat besteht.

7. Faservliesbahn nach einem der vorhergehenden Ansprüche, wobei die Faservliesbahn einer Wasserstrahlbehandlung unterworfen wird.

8. Faservliesbahn nach einem der vorhergehenden Ansprüche, wobei die Zugfestigkeit pro Gewichtseinheit der Bahn nicht kleiner als 0,01 kg/5cm/g/m² ist.

9. Zusammengestzte Bahn, umfassend eine Faservliesbahn nach einem der vorhergehenden Ansprüche, die mit mindestens einer ihrer Seiten auf ein anderes Bahnmaterial aufgelegt ist.

10. Zusammengesetzte Bahn nach Anspruch 9, wobei ein auf das Faservliesbahnmaterial aufgelegtes Bahnmaterial eine von der Faservliesbahn nach einem der Ansprüche 1 bis 8 abweichende Faservliesbahn ist.

11. Zusammengesetzte Bahn nach Anspruch 9, wobei das aufzulegende Bahnmaterial ein gewebtes oder gewirktes Textilerzeugnis ist.

12. Zusammengesetzte Bahn nach Anspruch 10, wobei das aufzulegende Bahnmaterial eine Faservliesbahn aus kurzen Stapelfasern ist, die auf einer Seite mit einer folienartigen dünnen Metallschicht versehen ist.

13. Zusammengesetzte Bahn nach Anspruch 12, wobei die Faservliesbahn nach einem der Ansprüche 1 bis 8 auf die von der Metallschicht abgekehrte Seite der Faservliesbahn aufgelegt ist.

14. Zusammengesetzte Bahn nach Anspruch 12, wobei das Faservliesbahnmaterial nach einem der Ansprüche 1 bis 8 auf die von der Metallschicht abgekehrte Seite der Faservliesbahn aufgelegt ist.

15. Zusammengesetzte Bahn nach Anspruch 12, wobei die Faservliesbahn aus kurzen Stapelfasern (aber ohne die Metallschicht) auf diejenige Seite des Faservliesbahnmaterials nach einem der Ansprüche 1 bis 8 aufgelegt ist, die der Seite gegenüberliegt, die mit der die Metallschicht aufweisenden Faservliesbahn versehen ist.

16. Zusammengesetzte Bahn nach einem der Ansprüche 12 bis 15, wobei die aus kurzen Stapelfasern bestehende Faservliesbahn, die auf ihrer einen Seite die Metallschicht aufweist, eine mittlere Flockenhäufigkeit im Bereich von 50 bis 500 Zählern auf 10 cm hat.

17. Verfahren zur Herstellung einer Faservliesbahn, bei dem ein geschmolzenes thermoplastisches Polymer mit austretenden Strömen aus einer Spinndüse ausgestoßen wird und unter einem Winkel zur Oberseite eines Sammelteils auf diese Oberseite auftrifft, um ein Gespinst zu bilden, dadurch gekennzeichnet, daß die Schmelzblasspinndüse so angeordnet ist, daß die Axialrichtung des ausgestoßenen Stromes der Schmelzblasdüse in Bezug auf die Tangeniallinie der Oberseite des Sammelteils unter einem Winkel von 15 bis 75° geneigt ist, daß die Geschwindigkeit des über die Oberseite des Sammelteils hinwegströmenden ausgestoßenen Stromes nicht kleiner ist als 5 m pro Sekunde und daß der Abstand zwischen der Spinndüse und der Oberseite des Sammelteils 10 bis 50 cm beträgt, wodurch ein ausgestoßener Strom erzeugt wird, der zwangsweise in einer Richtung längs der Oberseits des Sammelteils strömt, wobei er die Polymerfasern mitreißt und orientiert, von denen einige zur Bildung garnartiger Faserbündel miteinander verwickelt werden.

18. Verfahren nach Anspruch 17, wobei der Durchsatz des ausgestoßenen Stromes nicht kleiner ist als 5 Nl/min pro Einheit von 1 g/min des austretenden Polymers.

**Revendications**

1. Feuille non tissée composée principalement de fibres fines qui sont distribuées individuellement sensiblement dans toute la feuille et qui sont principalement orientées dans une direction ("la direction longitudinale"), ladite feuille comprenant également des faisceaux de fibres sous forme de fils desdites fibres fines qui sont aussi orientés dans la direction longitudinale de ladite feuille, le rapport des faisceaux de fibres aux fibres sur une surface de la feuille étant supérieur au rapport des faisceaux de fibres aux fibres sur l'autre surface de la feuille.

2. Feuille non tissée selon la revendication 1, dans laquelle les faisceaux de fibres sous forme de fils dépassent en nombre les fibres fines sur une surface du matériau en feuille et les fibres fines dépassent en nombre les faisceaux de fibres sous forme de fils sur l'autre surface dudit matériau en feuille.

3. Feuille non tissée selon la revendication 1 ou 2, dans laquelle le fibre fine consiste en une fibre synthétique thermoplastique et est produite par un procédé de soufflage à l'état fondu.

4. Feuille non tissée selon l'une des revendications précédentes, dans laquelle la fibre fine est une fibre ayant une longueur finie et un denier pas supérieur à 1 denier.

5. Feuille non tissée selon l'une des revendications précédentes, dans laquelle le coefficient de variation de la non-uniformité de la feuille n'est pas supérieur à 12%.

6. Feuille non tissée selon l'une des revendications précédentes, dans laquelle la fibre fine consiste en un téréphtalate de polybutylène.

7. Feuille non tissée selon l'une des revendications précédentes, dans laquelle ladite feuille non tissée est soumise à un traitement d'impact à l'eau.

8. Feuille non tissée selon l'une des revendications précédentes, dans laquelle la résistance à la rupture par unité de poids de la feuille n'est pas inférieure à 0,01 kg/5 cm/g/m².

9. Feuille composite comprenant une feuille non tissée selon l'une des revendications précédentes recouverte sur au moins l'une de ses surfaces d'un autre matériau en feuille.

10. Feuille composite selon la revendication 9, dans laquelle un matériau en feuille destiné à recouvrir ledit matériau en feuille non tissé est une feuille non tissée différente de la feuille nont tissée selon l'une des revendications 1 à 8.

11. Feuille composite selon la revendication 9, dans laquelle ledit matériau en feuille destiné au recouvrement est un tissu choisi parmi un tissu tricoté et un tissu tissé.

12. Feuille composite selon la revendication 10, dans laquelle ledit matériau en feuille destiné au recouvrement est une feuille de tissu non tissé consistant en courtes fibres couplées en brins munie sur une surface de ladite feuille de tissu d'une fine couche métallique sous forme de film.

13. Feuille composite selon la revendication 12, dans laquelle la feuille non tissée selon l'une des revendications 1 à 8 recouvre la surface de ladite feuille de tissu non tissé à distance de ladite couche métallique.

14. Feuille composite selon la revendication 12, dans laquelle le matériau en feuille non tissé selon l'une des revendications 1 à 8 recouvre la surface de ladite feuille de tissu non tissé qui est munie de la couche métallique.

15. Feuille composite selon la revendication 12, dans laquelle ladite feuille de tissu non tissé ayant de courtes fibres coupées en brins (mais sans la couche métallique) recouvre la surface du matériau en feuille non tissé selon l'une des revendications 1 à 8 opposée à la surface munie de la feuille de tissu non tissé comportant la couche métallique.

16. Feuille composite selon l'une des revendications 12 à 15, dans laquelle la feuille de tissu non tissé consistant en courtes fibres coupées en brins ayant sur une surface la couche métallique possède une fréquence moyenne de peluche de 50 à 500 par 10 cm.

17. Procédé de fabrication d'une feuille non tissée, dans lequel un polymère thermoplastique fondu est éjecté d'une filière avec des courants d'éjection et frappe la surface d'un élément collecteur suivant un angle par rapport à la surface pour former un tissu caractérisé en ce que la filière de soufflage à l'état fondu est disposée de façon que la direction axiale du courant d'éjection de la filière de soufflage à l'étant fondu soit inclinée suivant un angle de 15 à 75° par rapport à la ligne tangentielle de la surface de l'élément collecteur, la vitesse du courant éjecté soufflant au-dessus de la surface dudit élément collecteur n'étant pas inférieure à 5 mètres par seconde et la distance entre la filière d'éjection et la surface de l'élément collecteur étant de 10 à 50 cm, produisant ainsi un courant d'éjection qui est forcé de s'écouler dans une direction suivant la surface de l'élément collecteur, entraînant et orientant les fibres de polymère, dont certaines deviennent emmêlées pour former des faisceaux de fibres sous forme de fils.

18. Procédé de fabrication d'une feuille non tissée selon la revendication 17, dans lequel le volume éjecté du courant d'éjection n'est pas inférieur à 5 Nl/mn pour 1 g/mn de décharge unitaire de polymère.

Fig 1

Fig 2

Fig 3

Fig 4

Fig 5

Fig 6 A

3

Fig 6 B

Fig 7

Fig 8 A          Fig 8 B

Fig 9

Fig 10

Fig 11

Fig 12

Fig 13